# EUROPEAN PATENT SPECIFICATION

(11) **EP 0 751 454 B1**
(45) Date of publication and mention of the grant of the patent: **17.10.2001**
(21) Application number: 96110605.1
(22) Date of filing: 01.07.1996
(51) Int. Cl.: G06F 3/02

(54) **Control-specification design system used for load control devices**
System zum Entwerfen von Steuerungsvorgaben für Vorrichtungen zum Steuern von Lasten
Système pour définir des spécifications d'un appareil destiné à contrôler des charges

(30) Priority: 29.06.1995 JP 16425295
(43) Date of publication of application: 02.01.1997
(73) Proprietor: YAZAKI CORPORATION, Minato-ku Tokyo 108 (JP)
(72) Inventor: Imaizumi, Nobuhiro, c/o Yazaki Parts Co., Ltd., Haibara-gun, Shizuoka (JP); Oniishi, Tatsuaki, c/o Yazaki Parts Co., Ltd., Haibara-gun, Shizuoka (JP)
(74) Representative: Grünecker, Kinkeldey, Stockmair & Schwanhäusser Anwaltssozietät

(56) References cited:
- EP-A- 0 000 427
- EP-A- 0 251 477
- EP-A- 0 594 144

## Description

The invention relates to a control specification design system and a load control device which simplify the design process of a circuit for switching a plurality of electrical loads.

EP-251 477 A2 discloses an electronic calculator having function keys with programmable labels.

EP-594 144 A1 teaches a bus system for use in a motor vehicle. The bus system transmits signals between sensor modules and a switching and/or control device.

EP-000 427 A1 describes a road vehicle electrical system including a digitally controlled multiplex system whereby load devices distributed around the vehicle are controlled by signals from a transmitter connected to a plurality of receivers each controlling a group of load control devices. The signals of the transmitter are controlled by switches operable by the driver and comprise an address of a receiver and an instruction code for the loads.

It is the object of the present invention to provide a control-specification design system and a load control device, which simplify the design process of a circuit for switching a plurality of loads.

This object is achieved by the subject matter of claims 1 and 6.

Preferred embodiments of the invention are the subject matter of the dependent claims.

In the following preferred embodiments of the present invention are described referring to the accompanying drawings.

Fig. 1 is a functional block diagram showing an embodiment of a control- specification design management system used for load control devices according to the present invention.

Fig. 2 is a functional block diagram showing load control devices for which the control-specification design management system of the invention is used.

Fig. 3 is a flow chart showing a generation mode for generating control-specification information in the control-specification design management system.

Fig. 4 is a flow chart showing a storage mode for storing control-specification information storage in the control-specification design management system.

Fig. 5 is a diagram showing an example of a display showing the setting of control switches in a generation mode for generating control-specification information.

Fig. 6 is a diagram showing an example of a display showing the setting of loads in the control-specification information generation mode.

Fig. 7 is a diagram showing the data structure of control-specification information used in the control-specification design management system.

Fig. 8 is a diagram showing the data structure of a slip file used in the control-specification design management system.

Fig. 9 is a flow chart showing a rewrite mode for rewriting control-specification information in the control-specification design management system.

Fig. 10 is a flow chart showing a reference (retrieval) mode for referring a look-up table or a slip file prepared in the preceding design in the previous design in the control-specification design management system.

Fig. 11 is a flow chart showing a print mode for printing the contents of the slip file in the control-specification design management system.

Fig. 12 is a flow chart showing a dump display mode for dumping control-specification information that is stored in the storage.

Fig. 13 is a diagram showing an example of a print of the contents (connection correspondence of the control switches to the loads) of a slip file in the control-specification design management system.

Fig. 14 is a diagram showing an example of a print of the contents (connection correspondence of the connector terminals to the control switches) of a slip file in the control-specification design management system.

Fig. 15 is a first look-up table containing types of the control switches used in the control-specification design management system.

Fig. 16 is a second look-up table containing the correspondence of the positions of the control switches to the numbers assigned to the switch positions.

Fig. 17 is a third look-up table containing the control conditions of the loads.

Fig. 18 is a fourth look-up table containing the control conditions that can be selected by every type of the control switch.

Fig. 19 is a fifth look-up table containing the positions of the control switches that can be selected every type of the control switch.

Fig. 20 is a sixth look-up table containing the terminals that can be selected by every type of the control switch.

Fig. 21 is a table showing an example of control-specification information formed in the control-specification design management system.

Fig. 22 is a Look-up table containing the default correspondence of the addresses of the control-specification information formed by the control-specification design management system and the terminal positions thereof.

Fig. 23 is a functional block diagram showing a conventional control-specification design management system used for load control devices.

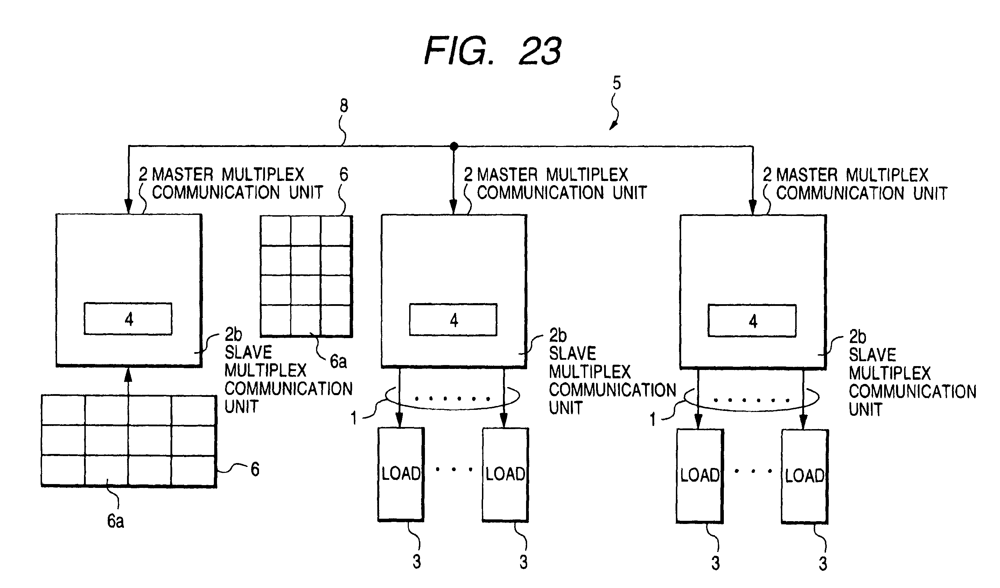

A conventional control-specification design management system used for load control devices is shown in Fig. 23.

As shown, a control-specification design management system 5 is used for load control devices 2b. In the system, the control-specification information on the connection correspondence of a plural number of control switches 6a arrayed on an operation panel 6 to loads 3 to be controlled are respectively stored in the load control devices 2b, which are designed to be exclusively used for those pieces of control-specification information, respectively. Accordingly, the load control devices 2b of which the number is equal to the number of kinds of control-specification information are provided in the control-specification design management system. A design of control-specification information is wholly done by manual work.

The exclusive load control devices 2b, respectively, control the loads 3, ..., 3 connected to those control units by using load control information 1 formed on the basis of the control-specification information.

Also in a control-specification design management system 5 used for load control devices each of which includes a master multiplex communication unit 2a for carrying out a multiplexing process of load control information 1 based on the control-specification information through a multiplex transmission line 8, and a plural number of slave multiplex communication units 2b, ..., 2b, connected to the master multiplex communication unit, for carrying out a multiplexing process of load control information 1 based on the control-specification information through a multiplex transmission line 8, and controlling loads 3, ..., 3 by the multiplexed load control information 1, the control-specification information are stored for each exclusive master multiplex communication unit 2 and each slave multiplex communication unit 2b. Accordingly, the exclusive master multiplex communication units 2 and the slave multiplex communication units 2b, ..., 2b of which the number is equal to the number of kinds of the control-specification information are provided. A design of control-specification information is wholly done by manual work.

The exclusive master multiplex communication units 2a and the slave multiplex communication units 2b, ..., 2b control the loads 3, ..., 3 connected thereto by using the load control information 1 based on the control-specification information.

In case that the control-specification information are different every user and every type of motor vehicle as in motor vehicles, the exclusive master multiplex communication units 2a and the slave multiplex communication units 2b, ..., 2b, of which number is equal to the number of users and the number of types of the motor vehicles, are provided.

The "load control information 1" as the details of the control of the loads 3, ..., 3 contains types of the loads 3, ..., 3 (e.g., lamps and an air conditioner as electric components installed in the vehicles), and control methods (e.g., the control of light intensities of lamps and the control of the supply of electric power to the air conditioner (power on and off)).

As described above, in the conventional control-specification design management system, it is necessary to provide the exclusive load control devices (or the exclusive master multiplex communication units and the slave multiplex communication units) of which the number is equal to the number of kinds of the control-specification information. It is difficult to standardize the load control devices in their design. The difficulty of the standardization makes it difficult to improve the productivity and to realize cost reduction.

The preferred embodiment of the present invention will be described with reference to the accompanying drawings.

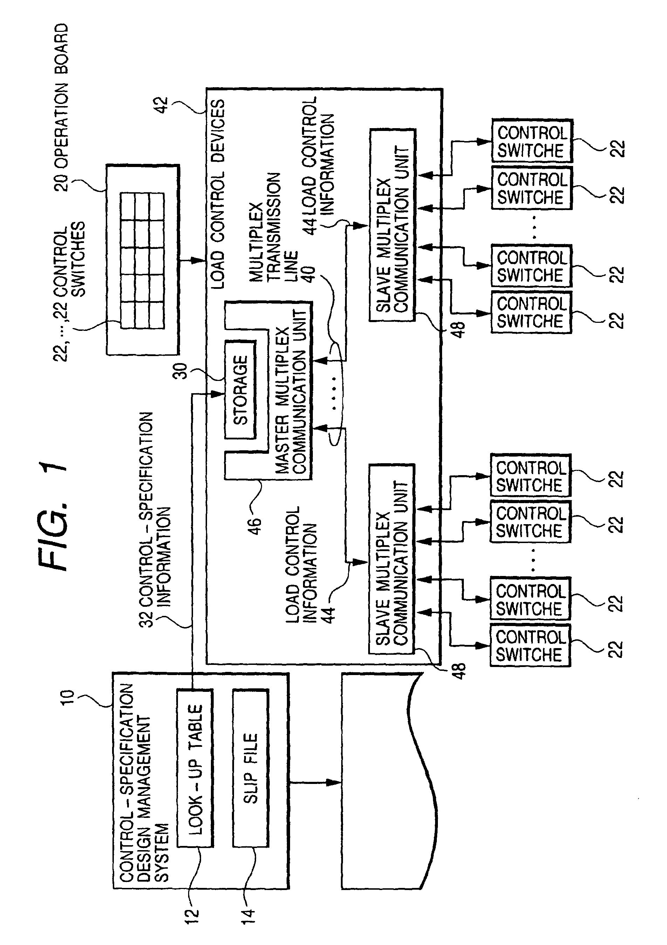

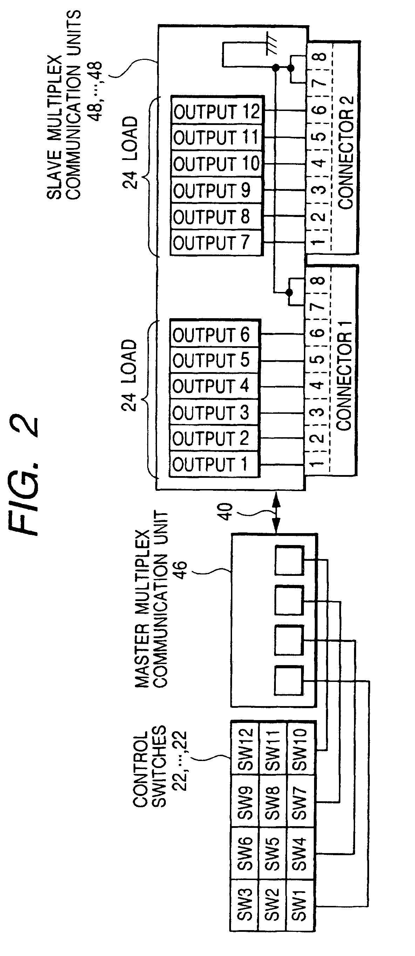

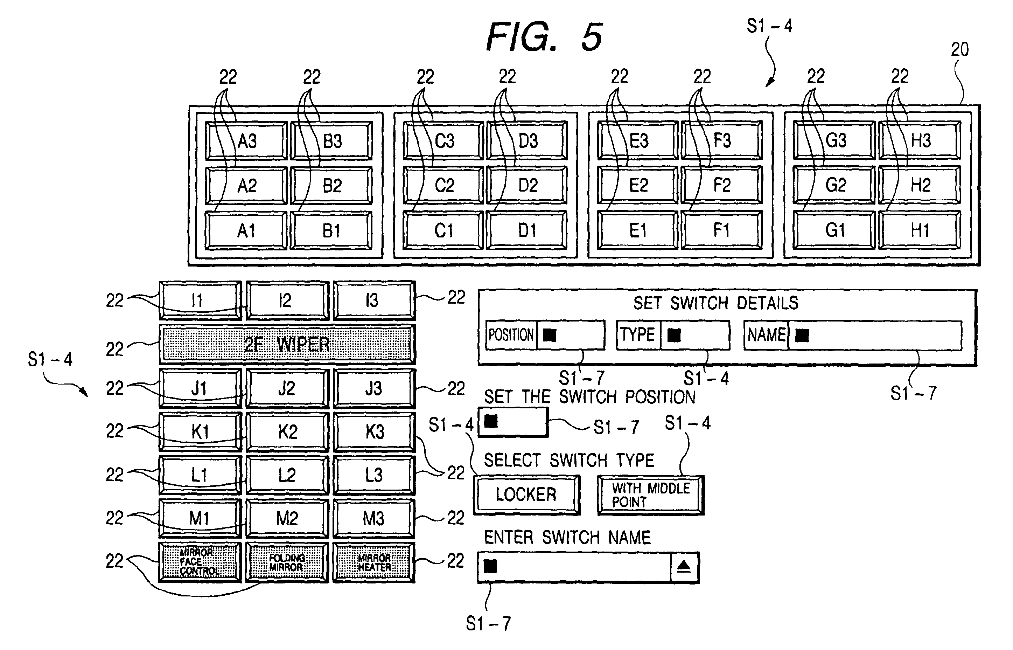

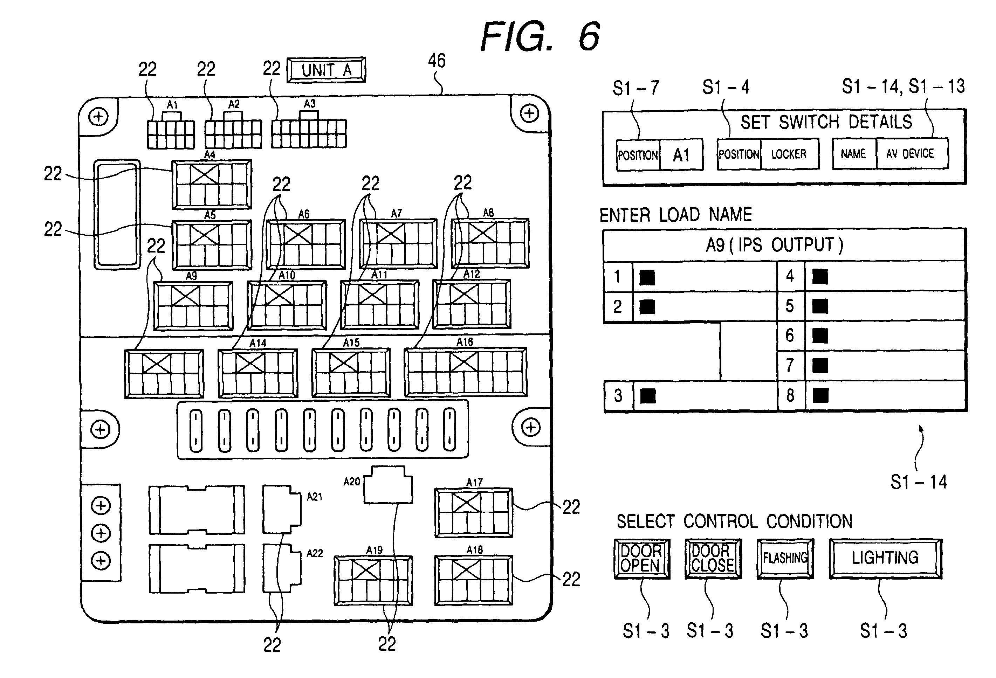

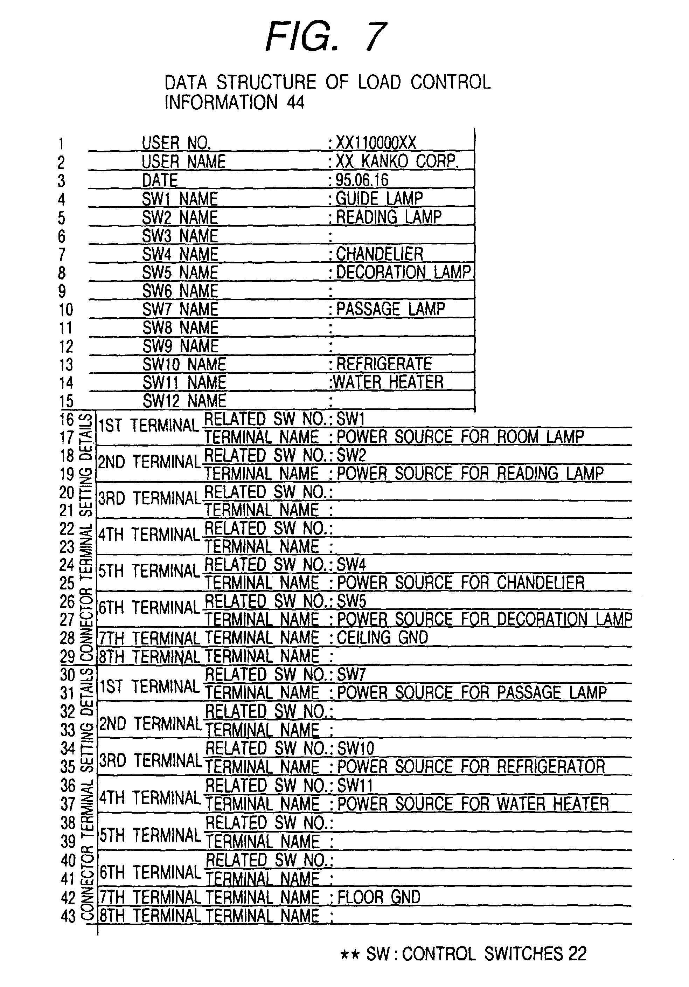

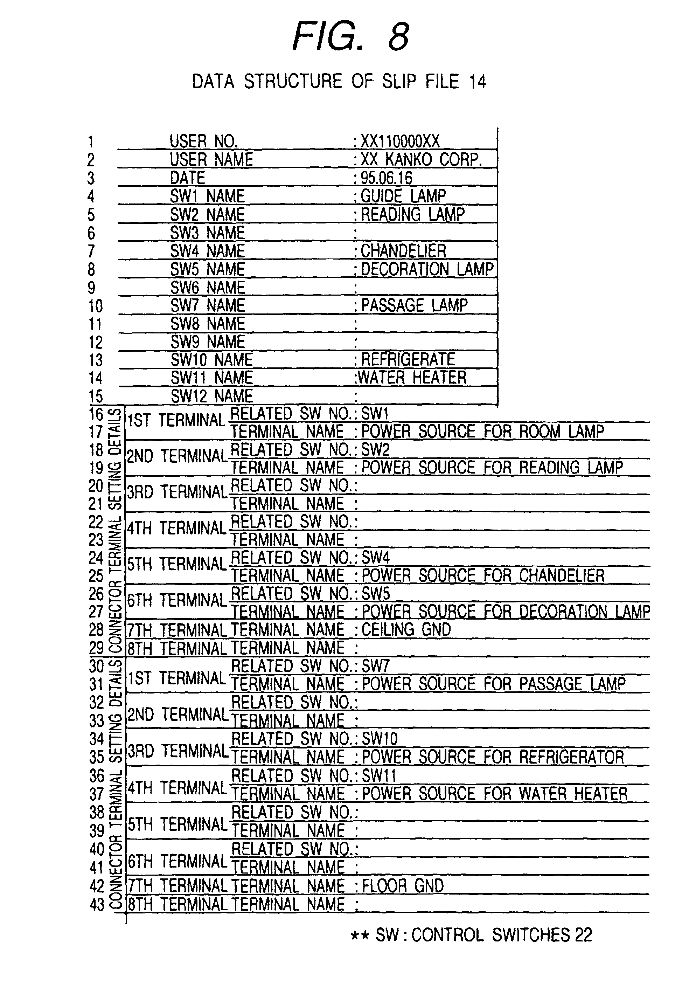

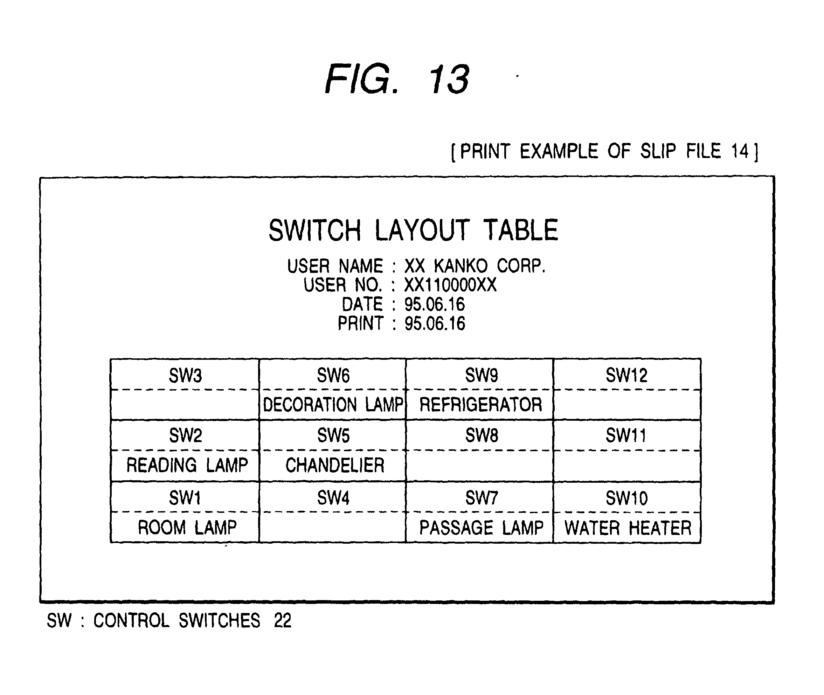

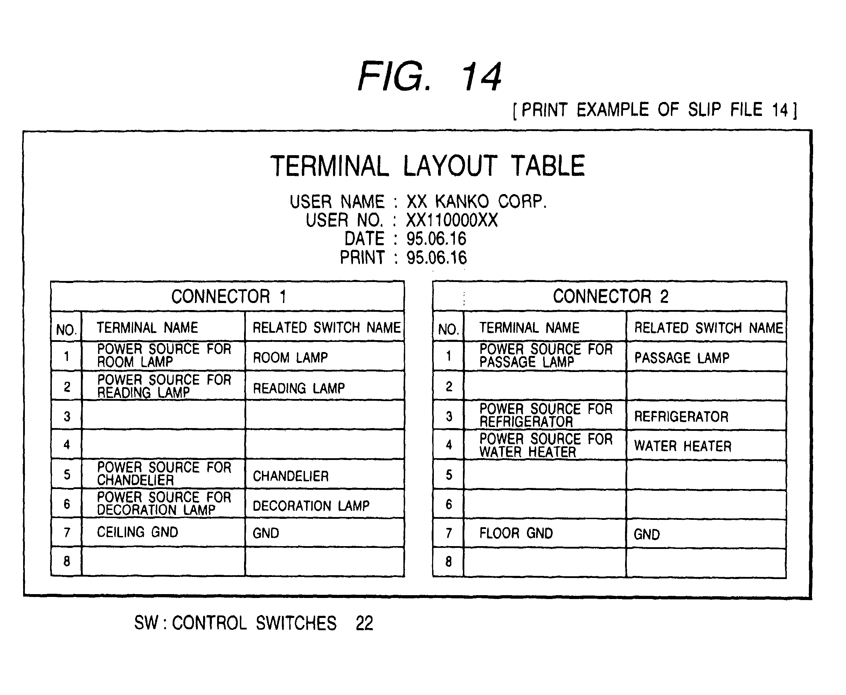

Fig. 1 is a functional block diagram showing a control-specification design management system 10 used for load control devices 42, ..., 42 according to an embodiment of the present invention. Fig. 2 is a functional block diagram showing the load control devices 42, ..., 42 for which the control-specification design management system 10 shown in Fig. 1 is applied. Fig. 5 is a diagram showing an example of a display showing the setting of control switches 22, ..., 22 in the generation mode for generating control-specification information 32. Fig. 6 is a diagram showing an example of a display showing the setting of loads 24, ..., 24 in a generation mode for generating control-specification information 32. Fig. 7 is a diagram showing the data structure of control-specification information 32. Fig. 8 is a diagram showing the data structure of a slip file 14. Fig. 13 is a: diagram showing an example of print of the contents (connection correspondence of the control switches 22, ..., 22 to the loads 24, ..., 24) of a slip file in the control-specification design management system. Fig. 14 is a diagram showing an example of print of the contents (connection correspondence of the connector terminals to the control switches 22, ..., 22) of a slip file in the control-specification design management system.

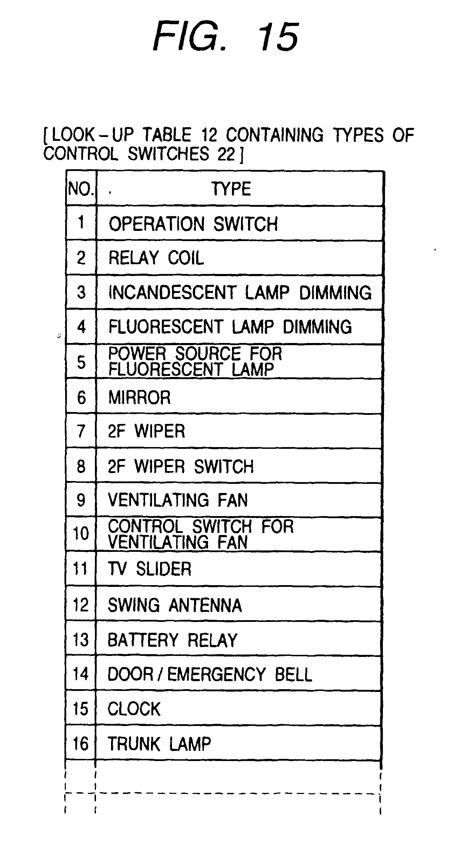

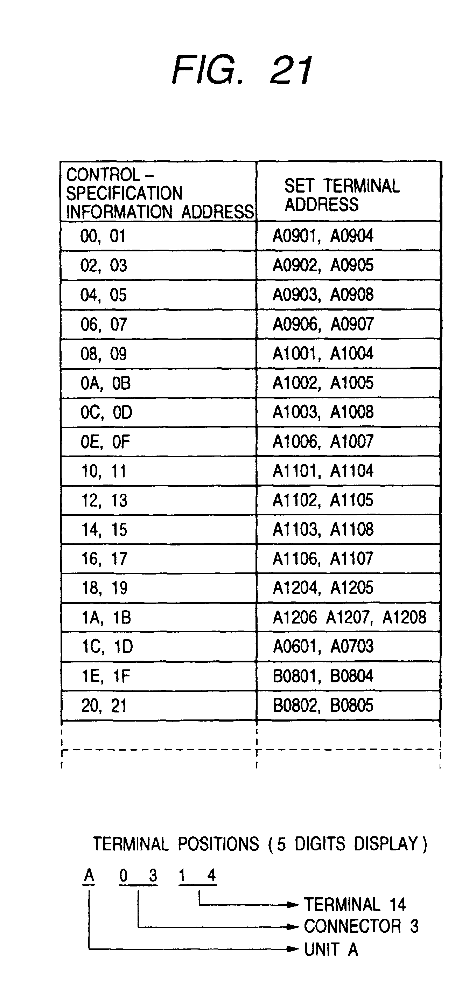

Figs. 15 to 20 show look-up tables used in the control-specification design management system. Fig. 21 shows a table of an example of control-specification information formed in the control-specification design management system.

The arrangement of the load control devices for the multiplexing process 42, ..., 42, used in the control-specification design management system 10 according to the present invention, will be described. The load control devices for the independent process 42, ..., 42 may be constructed by simplifying the load control devices 42, ..., 42, end hence will not be described.

In the control-specification design management system (10), the multiplexing-process load control devices 42, ..., 42 each includes a rewritable storage 30 which stores control-specification information on the connection correspondence of a plural number of control switches 22, ..., 22 arrayed on an operation board 20 to loads 24, ..., 24 as objects to be controlled, and is capable of controlling loads 24, ..., 24 by using load control information 44 based on the control-specification information 32. To be more specific, as shown in Fig. 1, the load control device 42 includes a rewritable storage 30 which stores control-specification information 32 on the connection correspondence of electric components installed in a vehicle, such as tail lamps, air conditioner, incandescent lamps, fluorescent lamps, mirrors, wipers, ventilating fans, TV slider, and clock, to a plural number of control switches 22, ..., 22 arrayed on an operation panel 20, a master multiplex communication unit 46, which belongs to a master system, for carrying out a process of multiplexing load control information 44 based on the control-specification information 32 through a multiplex transmission line 40, and a plural number of slave multiplex communication units 48, ..., 48 which belong to a slave system, for carrying out a process of multiplexing load control information 44 based on the control-specification information 32 through a multiplex transmission line 40, and being capable of controlling the loads 24, ..., 24 by using the multiplexed load control information 44. The master multiplex communication unit 46 is interconnected with the slave multiplex communication units 48, ..., 48 by multiplex transmission lines 40.

In the present embodiment, the "connection" means an electrical connection and a state ready for a signal processing that is performed through a metal electrode connector of a readout means. A connection by electromagnetic wave (e.g., radio wave and electrostatic induction), or an optical connection by infrared-rays or visible rays, for example, may also be used instead of the mechanical connection.

The operation board 20 may be installed at a proper location, for example, a location close to the driver seat. The control switches 22, ..., 22 are arrayed on the operation board 20 according to predetermined rules. The control switches 22, ..., 22 are, for example, an on/on switch, an on/off switch, and a volume switch.

As shown in Fig. 1 or 2, the master multiplex communication unit (master system) 46 and the plural number of slave multiplex communication units (slave system) 48, ..., 48, as shown in Fig. 1, are interconnected by the multiplex transmission lines 40.

The "load control information 44" as the details of the control of the loads 24, ..., 24 contains types of the loads 24, ..., 24 (e.g., tail lamps and an air conditioner as electric components installed in the vehicles), control methods (e.g., the control of periods of flashing of the tail lamps, light intensities of lamps, turning on and off the lamps simultaneously with the opening/closing of doors, and the control of the supply of electric power to the air conditioner).

In the present embodiment, the word "vehicle" means motor vehicles, for example, buses and automobiles, and electric cars, airplanes, ships, and the like. More broadly, it involves systems with load control devices, installed in machinery, for controlling various loads.

The master multiplex communication unit 46 contains a communication interface (referred to as an I/F) circuit, through which load control information 44 is transferred to and from the slave multiplex communication units 48, ..., 48 by way of the multiplex transmission lines 40 (viz., a multiple) communication is performed), an input I/F circuit connected to the control switches 22, ..., 22, for example, a ROM (read only memory) for storing preset control programs (including a communication protocol for multiplex transmission) and fixed data, a temporary storage (RAM) (random access memory) used as a work area in which load control information 44 is developed when a preset job is executed under a control program, a metal electrode connector to which the storage 30 is inserted to read load control information 44 out of the storage 30, an internal timer used for a multiplexing process when a trouble happens in a communication mode, and a CPU for executing a multiplexing process and the like. An output I/F circuit includes a diagnostic output terminal for producing a signal indicative of a trouble of the load.

In the present embodiment, the "to electrically mount" means a state for a signal processing that is performed through a metal electrode connector of a readout means. A connection by electromagnetic wave (e.g., radio wave and electrostatic induction), or an optical connection by infrared-rays or visible rays, for example, may also be used instead of the mechanical connection.

The slave multiplex communication units 48, ..., 48 of the load control device 42 shown in Fig. 1 or 2 are installed in a proper location of the vehicle (for example, the rear side of the ceiling, under the floor, or a location near the driver seat). Each of the slave multiplex communication units 48, ..., 48 includes a communication I/F circuit, through which load control information 44 is transferred to and from the master multiplex communication unit 46 by way of the multiplex transmission lines 40 (viz., a multiple communication is performed), an input I/F circuit connected to a plural number of sensors (e.g., thermal sensor), for example, power control means (e.g., IPS) for controlling the loads 24, ..., 24 (e.g., tail lamps, motors, and air conditioner) and switching means (for example, relays), connectors for the power control means (e.g., IPS) and the switching means (for example, relays), a ROM (read only memory) for storing preset control programs (including a communication protocol for multiplex transmission) and fixed data, a temporary storage (RAM) (random access memory) used as a work area in which load control information 44 is developed when a preset job is executed under a control program, a nonvolatile memory (EEPROM in the embodiment) for storing load control information 44, an internal timer used for a multiplexing process when a trouble happens in a communication mode, and a CPU for executing a multiplexing process and the like.

Connectors 1 and 2 are used for the slave multiplex communication units 48, ..., 48, and each connector is provided with eight terminals (terminals 1 to 8).

The output terminals of the connectors of the slave multiplex communication units 48, ..., 48 are electrically connected to the loads 24, ..., 24, as shown in Fig. 1 or 2.

The storage 30 for storing control-specification information 32 is of the rewritable type, and electrically and removably coupled with the master multiplex communication unit 46. In the embodiment, a nonvolatile memory, for example, an EEPROM, is used for the storage 30.

The storage 30 is not limited to the nonvolatile memory, but may be any type of storing means if it allows load control information 44 to be updated and to be stored at least a preset number of times. This type of storing means includes magnetic recording medium and magneto-optical storing means, both being rewritable or reprogrammable and electrically and removably with the related one. The magnetic recording medium are, for example, magnetic cards, magnetic discs (e.g., removable hard discs, floppy discs and bubble memories), and the magneto-optical storing means is, for example, MO discs.

The arrangement of the control-specification design management system 10 which is the embodiment of the present invention will be described.

The control-specification design management system 10 used for the load control devices 42, ..., 42 includes a look-up table 12 storing the connection correspondence of the loads 24, ..., 24 that can be controlled when these are connected to the control switches 22, ..., 22.

In the embodiment of the present invention, the look-up table 12 is stored in a nonvolatile memory (e.g., EEPROM), and the memory is set to the control-specification design management system 10.

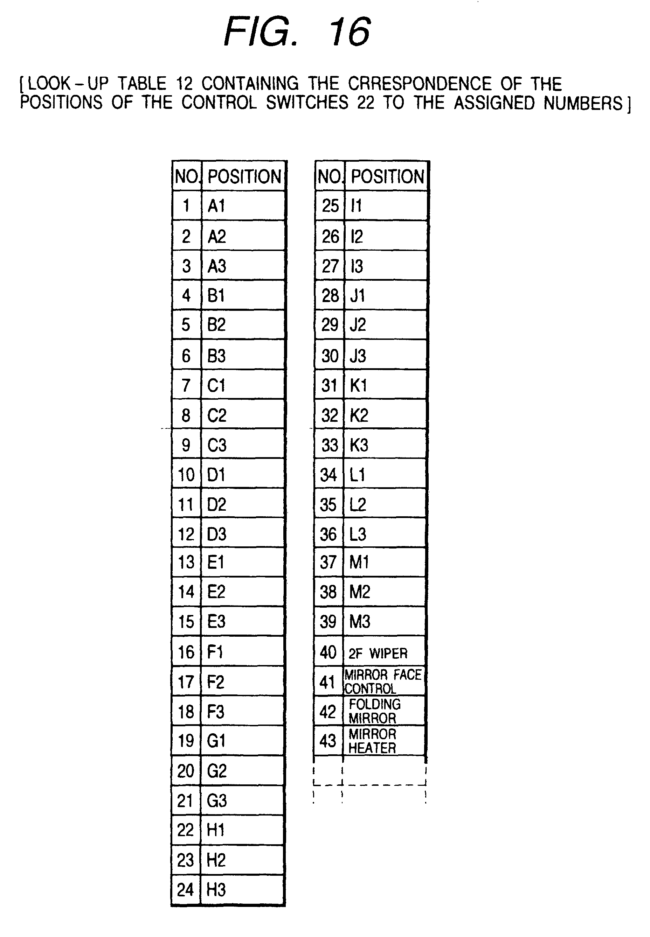

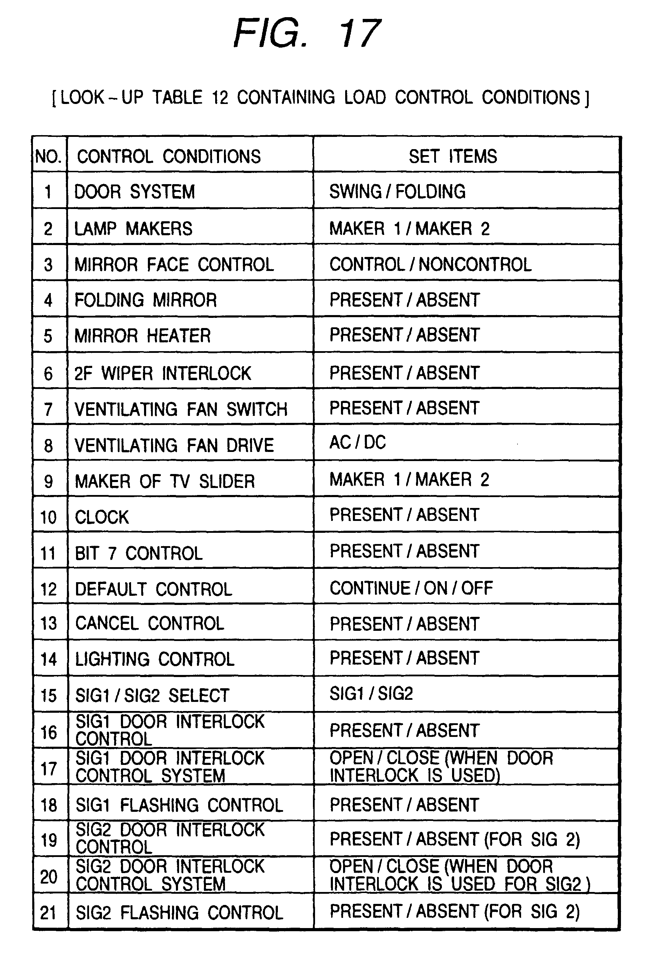

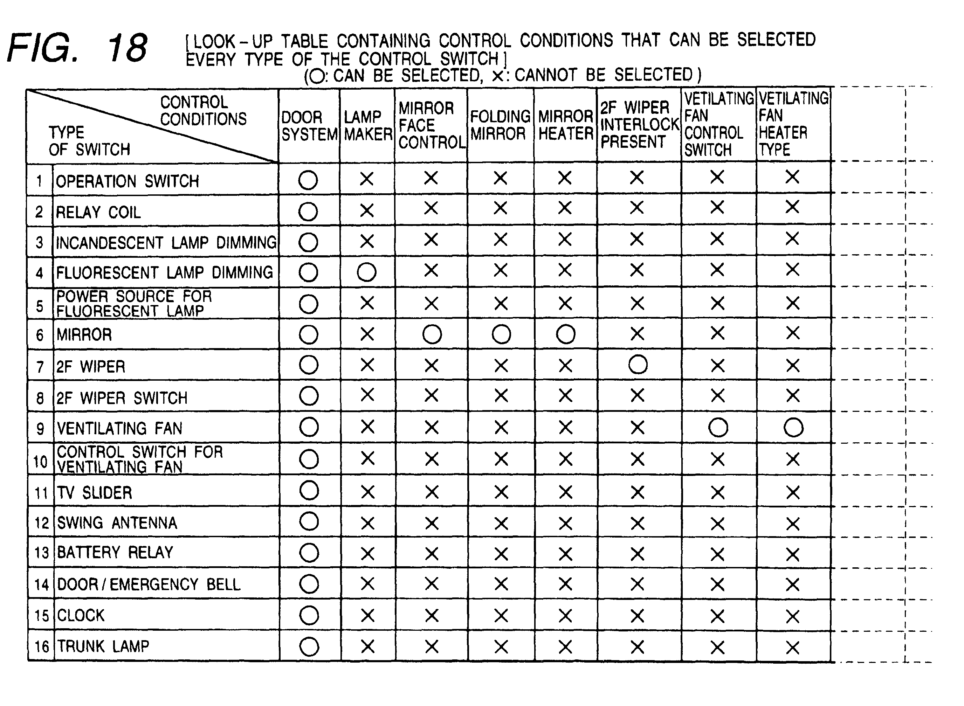

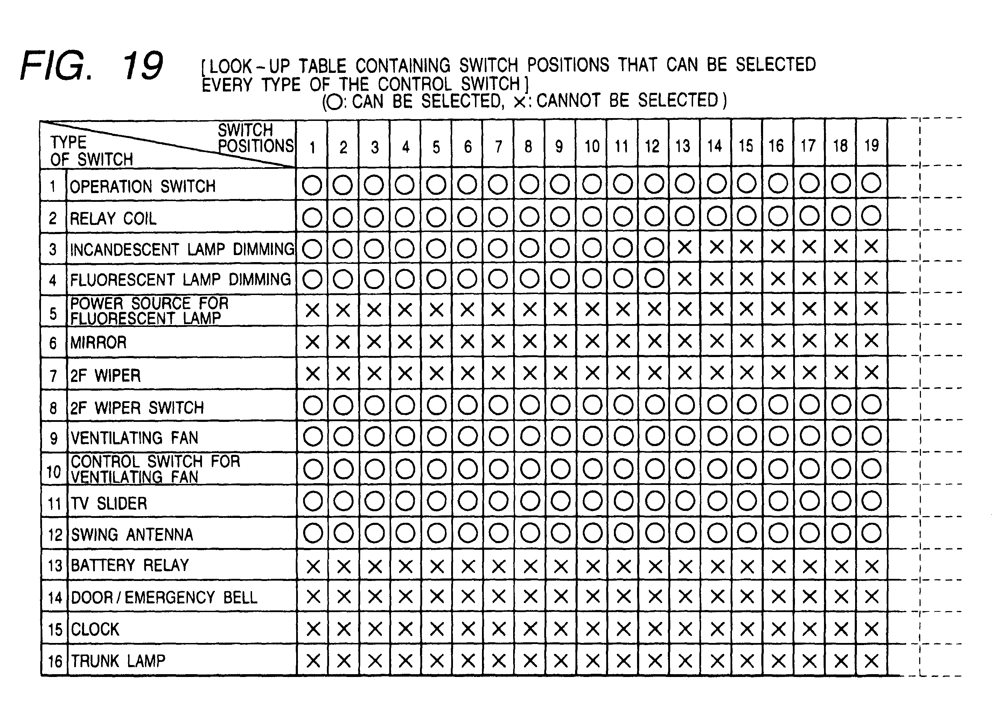

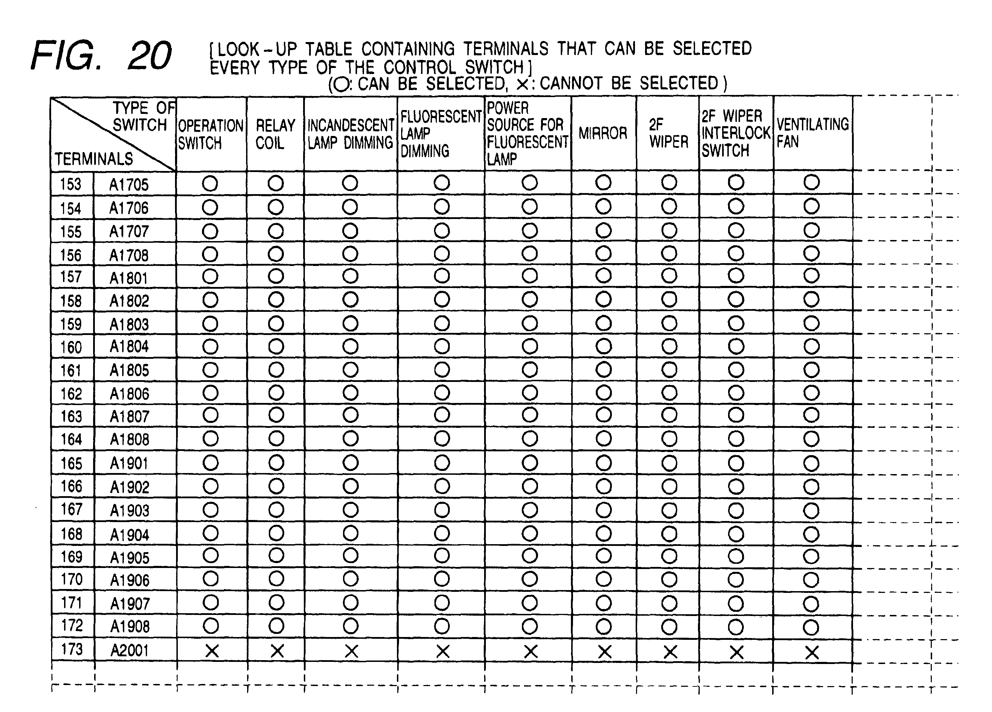

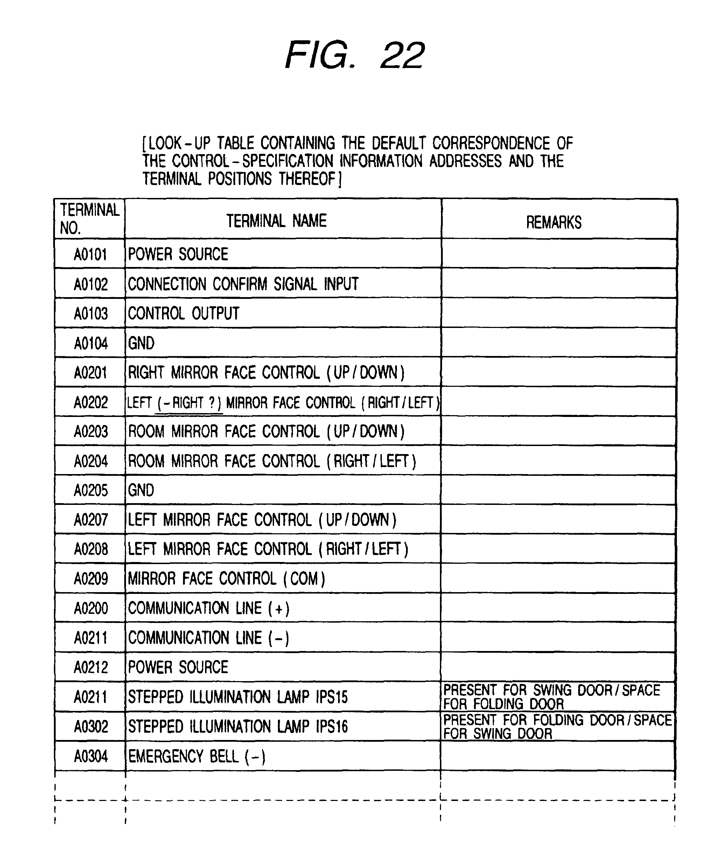

The embodiment uses seven look-up tables 12. Those look-up tables 12 are: a first look-up table 12 (Fig. 15) containing types of the control switches 22, ..., 22, a second look-up table 12 (Fig. 16) containing the correspondence of the positions of the control switches 22, ..., 22 to the numbers assigned to the positions thereof, a third look-up table 12 (Fig. 17) containing the control conditions of the loads 24, ..., 24, a fourth look-up table 12 (Fig. 18) containing the control conditions that can be selected every type of the control switch 22, a fifth look-up table 12 (Fig. 19) containing the positions of the control switches 22, ..., 22 that can be selected every type of the control switch 22, a sixth look-up table 12 (Fig. 20) containing the terminals that can be selected every type of the control switch 22, and a seventh look-up table 12 (Fig. 22) containing the correspondence of the addresses of the formed control-specification information 32 and the terminal positions.

The control-specification design management system 10 is used for designing and managing the control-specification information 32 used for the load control devices 42, ..., 42 for multiplexing process. In designing the connection correspondence of the control switches 22, ..., 22 to the loads 24, ..., 24, the control-specification design management system 10 refers to the look-up table 12, and presents to a designer candidates for the loads 24, ..., 24 that can be controlled when these are connected to the control switches 22, ..., 22, to thereby impel the designer to select the most suitable one from among those presented candidates. In this way, he forms control-specification information 32 every slave multiplex communication unit 48, with the aid of the control-specification design management system 10. To this end, the CPU as a key part for operation and storage means (magneto-optical or magnetic storing means) for storing the look-up tables 12 are incorporated into the control-sppcification design management system 10, coupled with the master multiplex communication unit 46 and the storage (EEPROM in the embodiment) 30. The data structures (called data formats) of the control-specification information 32 prepared for each of the slave multiplex communication units 48, ..., 48 are shown in Figs. 7 and 21. The data format shown in Fig. 7 is described in a manner that designers and workers can easily understand it. The data format shown in Fig. 21 is described in a manner that the computer resource, for example, the CPU as a key part for operation, can easily interpret and execute it. Both the data structures have the same meaning.

The control-specification design management system 10 (CPU) forms a slip file 14 using the formed control-specification information 32, and includes a printing means (a printer in the embodiment (e.g., a laser printer, a thermal transfer printer, an ink jet printer, a discharging printer, or a thermal printer). The data structure (called data format) of the slip file 14 is shown in Fig. 8. The printing means may be substituted by a display means, for example, a display device.

In designing the connection correspondence of the control switches 22, ..., 22 to the loads 24, ..., 24, the CPU refers to the look-up table 12 or a slip file 14 prepared in the preceding design, and presents to a designer candidates for the loads 24, ..., 24 that can be controlled when these are connected to the control switches 22, ..., 22, to thereby impel the designer to select the most suitable one from among those presented candidates, whereby control-specification information 32 is formed. To this end, the control-specification design management system 10 is provided with storing means (magneto-optical or magnetic storing means) for storing the slip file 14 prepared in the preceding design.

In addition to the CPU as a key part for operation and the storing means for storing slip file 14 and the look-up table 12, the control-specification design management system 10 further includes an I/F circuit for writing the control-specification information 32 to the storage 30, a printer I/F circuit for printing the slip file 14, a ROM (read only memory) for storing preset control programs and fixed data (e.g., a firmware program), a temporary storing means (RAM) used as a work area when preset jobs are executed by control programs, and a metal electrode connector to which the storage 30 (or the connector connected to the storage 30) is put to read the control-specification information 32.

The slip file 14 printed out by the printing means, for example, a printer (or slip file 14 displayed by a display means, for example, a display device) is formatted as of "Switch Layout Table" and "Terminal Layout Table" shown in Figs. 13 and 14.

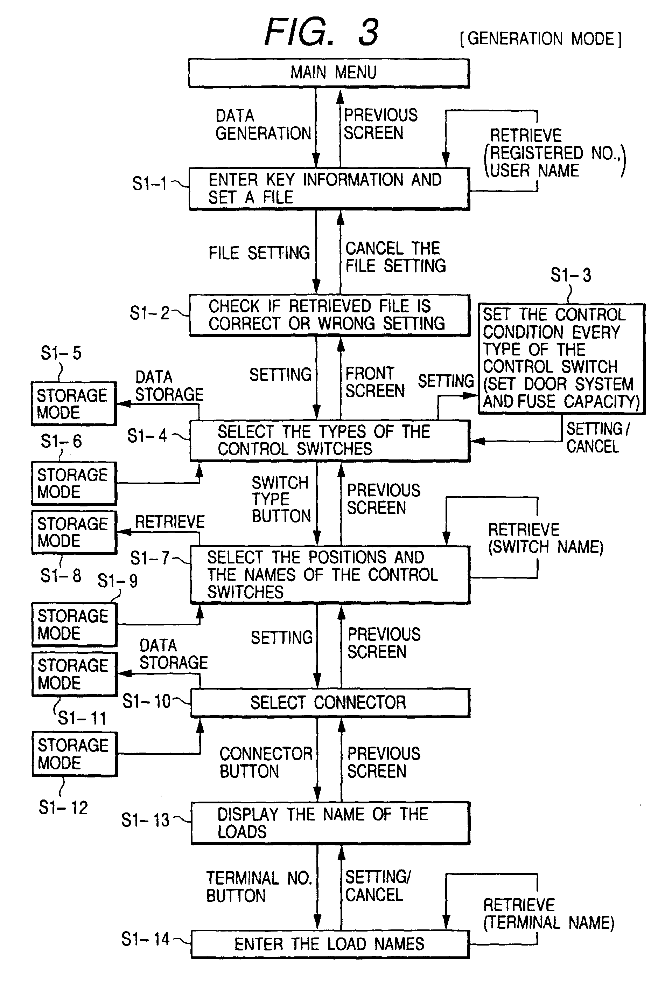

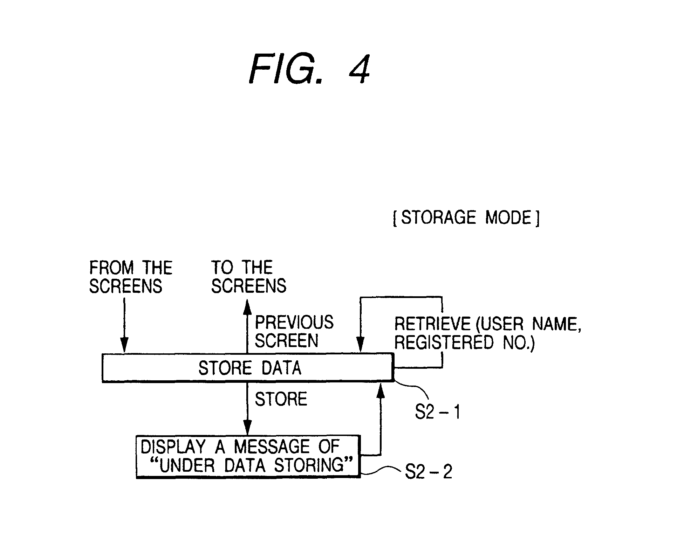

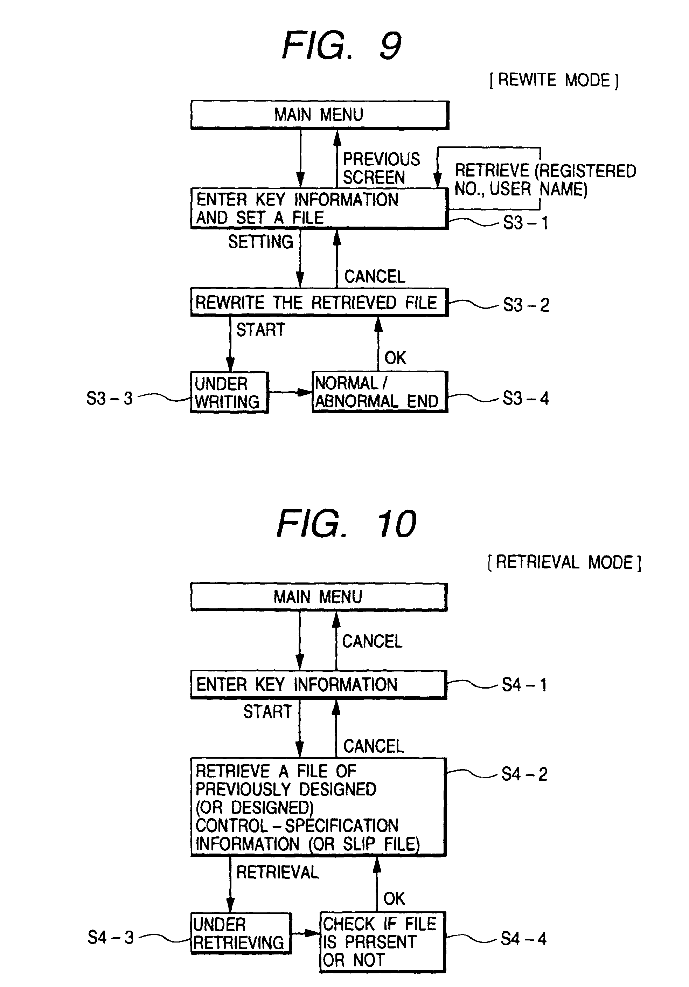

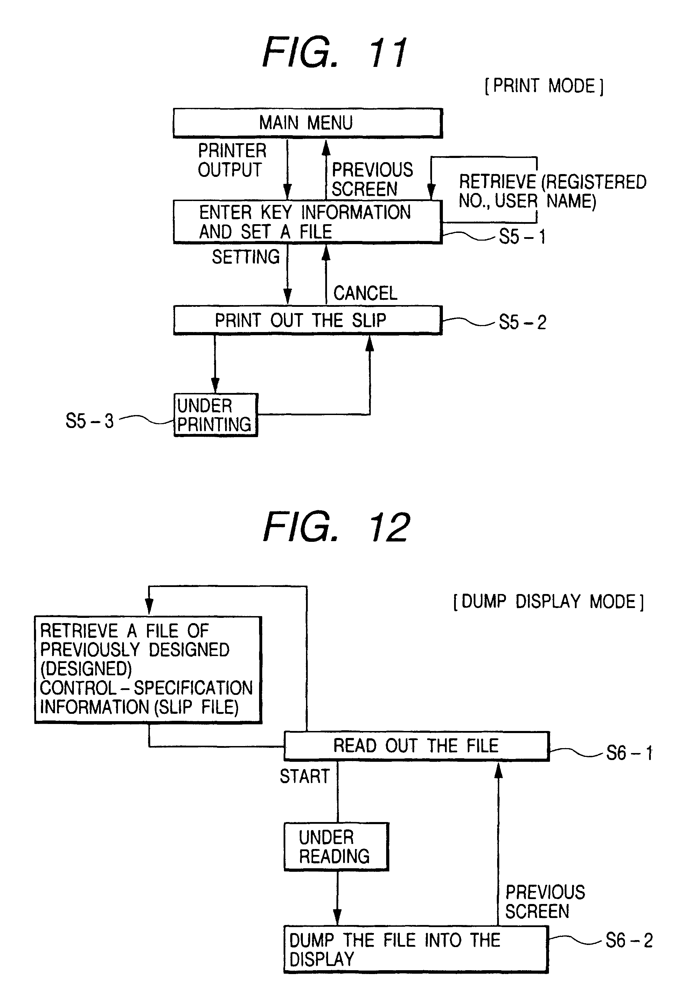

Fig. 3 is a flow chart showing a generation mode for generating control-specification information in the control-specification design management system. Fig. 4 is a flow chart showing a storage mode for storing a control-specification information in the control-specification design management system. Fig. 9 is a flow chart showing a rewrite mode for rewriting control-specification information 32 in the control-specification design management system 10. Fig. 10 is a flow chart showing a reference (retrieval) mode for retrieving a look-up table 12 or a slip file 14 prepared in the preceding design in the previous design in the control-epecification design management system 10. Fig. 11 is a flow chart showing a print mode for printing the contents of the slip file 14 in the control-specification design management system 10. Fig. 12 is a flow chart showing a dump display mode for dumping control-specification information 32 that is stored in the storage 30. Fig. 22 shows a look-up table 12 containing the default correspondence of the addresses of the control-specification information 32 formed by the control-specification design management system 10 and the terminal positions.

The operation of the load control devices 42, ..., 42 to which the control-specification design management system 10 is applied in its use will first be described.

The load control devices 42, ..., 42 are the independent-process load control device 42, ..., 42 or the multiplexing-process load control device 42, ..., 42 for motor vehicles.

The independent-process load control device 42 ..., 42 or the multiplexing-process load control device 42, ..., 42 for motor vehicles are capable of randomly reading control-specification information 32 out of the storage 30 (nonvolatile memory, e.g., EEPROM in the embodiment). The data formats of the control-specification information 32 stored in storage 30 (nonvolatile memory, e.g., EEPROM in the embodiment) are shown in Figs. 7 and 21. The data format shown in Fig. 7 is described in a manner that designers and Workers can easily understand it. The data format shown in Fig. 21 is described in a manner that the computer resource, for example, the CPU as a key part for operation, can easily interpret and execute it. Both the data formats have the same meaning.

When any of the control switches 22, ..., 22 arrayed on the operation panel 20 is turned on, the load control devices 42, ..., 42 may execute the control of the loads 24, ..., 24 by using the load control information 44 based on the control-specification information 32 (see Figs. 7 and 21) that is read out of the storage 30 (nonvolatile memory, e.g., EEPROM in the embodiment).

In the multiplexing-process load control device 42, ..., 42 for motor vehicles, the master multiplex communication unit 46 and the plural number of the slave multiplex communication units 48, ..., 48 are each capable of carrying out a process of multiplexing load control information 44, through the multiplex transmission line 40 (optical fiber cable in the embodiment).

In the multiplexing-process load control device 42, ..., 42 for motor vehicles, the master multiplex communication unit 46 are capable of carrying out a process of multiplexing load control information 44 based on the control-specification information (Figs. 7 and 21), through the multiplex transmission line 40 (optical fiber cable in the embodiment).

The communication I/F circuit contained in the master multiplex communication unit 46 allows the lead control information 44 to be transferred to and from the slave multiplex communication units 48, ..., 48 therethrough by way of the multiplex transmission lines 40 (viz., it allows a multiple communication). The input I/F circuit Controls the input control of the switches 22, ..., 22, for example. The ROM (read only memory) stores preset control programs (including a communication protocol for multiplex transmission) and fixed data (e.g., firmware program). The temporary storage (RAM) (random access memory) is used as a work area in which load control information 44 is developed when a preset job is executed under a control program. The metal electrode connector is used for the electrical mounting of the storage 30 (nonvolatile memory, e.g., EEPROM in the embodiment). The internal timer enables a multiplexing process when a trouble happens in a communication mode. The CPU executes a multiplexing process and the like.

Similarly, the slave multiplex communication units 48, ..., 48 of the multiplexing-process load control device 42, ..., 42 for vehicles are each capable of carrying out a process of multiplexing load control information 44 based on the control-specification information 32 (Figs. 7 and 21), through the multiplex transmission line 40 (optical fiber dable in the embodiment), and controlling the loads 24, ..., 24 by using the multiplexed load control information 44.

The communication I/F circuit contained in each of the slave multiplex communication units 48, ..., 48 allows the load control information 44 to be transferred to and from the slave multiplex communication units 48, ..., 48 therethrough by way of the multiplex transmission lines 40 (viz., it allows a multiple communication). The input I/F circuit allow the inputting of signals from a plural number sensors (e.g., thermal sensors). The connector electrically connects power control means (e.g., IPS) for controlling the load 24, ..., 24 (e.g., tail lamps, motors, and air conditioner) and switching means (for example, relays). The ROM (read only memory) for storing preset control programs (including a communication protocol for multiplex transmission) and fixed data (e.g., firmware program). The temporary storage (RAM) (random access memory) is used as a work area in which load control information 44 is developed when a preset job is executed under a control program. The nonvolatile memory (EEPROM in the embodiment) stores load control information 44. The internal timer enables a multiplexing process when a trouble happens in a communication mode. The CPU executes a multiplexing process in the slave system and the like.

Connectors 1 and 2 are used for the slave multiplex communication units 48, ..., 48, and each connector is provided with eight terminals (terminals 1 to 8).

The "load control information 44" as the details of the control of the loads 24, ..., 24, as shown in Fig. 17, 18 or 19, contains types of the loads 24, ..., 24 (e.g., lamps and an air conditioner as electric components installed in the vehicles), and control methods (e.g., the control of light intensities of lamps, the control of turning on and off the lamps simultaneously with the opening/closing of doors, and the control of the supply of electric power to the ain conditioner power on and off).

The storage 30 (nonvolatile memory, e.g., EEPROM in the embodiment) is electrically and removably coupled with the independent-process load control device 42, ..., 42 or the multiplexing-process load control device (specifically, the master multiplex communication unit 46) 42, ..., 42, and stores control-specification information 32 (Figs. 7 and 21) on the connection correspondence of a plural number of control switches 22, ..., 22 arrayed on an operation panel 20, and loads 24, ..., 24 as objects to be controlled.

The control-specification information 32 (Figs. 7 and 21) on the connection correspondence is information for specifying the loads 24, ..., 24 to be driven when the control switches 22, ..., 22 are turned on.

The storage 30 (nonvolatile memory, e.g., EEPROM in the embodiment) that stores the control-specification information 32 (Figs. 7 and 21) is of the rewritable type. To alter the control-specification information 32 in the storage, the storage 30 is removed from the load control device 42, ..., 42, and the information is altered.

Thus, designed control-specification information 32 (Figs. 7 and 21) is stored in the rewritable storage 30 (nonvolatile memory, e.g., EEPROM in the embodiment). The storage 30 is electrically and removably coupled with the load control device 42, ..., 42 (or the master multiplex' communication unit 46 or the slave multiplex communication units 48, ..., 48), and the designed control-specification information 32 may be transmitted to the device when required. To alter the designed control-specification information, all a designer has to do is to alter only the control-specification information 32 in the storage 30. Accordingly, in the present invention, there is no need of providing the exclusive load control devices 42, ..., 42 or the exclusive master multiplex communication units 46 or the exclusive slave multiplex communication units 48, ..., 48, of which the number is equal to the number of kinds of the control-specification information 32, although such number of exclusive load control devices are required in the conventional control-specification design management system 10. Therefore, the invention makes it easy to standardize the load control devices and the wire harness (viz., to manufacture those according to established standards). The reduction of the number of steps of the design process, the productivity improvement, the cost reduction are realized.

The control-specification information 32 (Figs. 7 and 21) may also be altered in a manner that a writing means, externally provided, is directly and electrically connected to the load control device 42, ..., 42 in a state that he storage 30 (nonvolatile memory, e.g., EEPROM in the embodiment) is electrically and mechanically coupled with the load control devices 42, ..., 42.

As shown in Figs. 15 to 20, the connection correspondence of the loads 24, ..., 24 that can be controlled when these are connected to the control switches 22, ..., 22, and these control switches are recorded in the look-up tables 12. In the present embodiment, the look-up tables 12 are stored in a nonvolatile memory (e.g., an EEPROM) contained in the control-specification design management system 10.

The connection correspondence stored in the look-up table 12 are the combination of type information indicative of types of the control switches 22, ..., 22, information of locations of the control switches 22, ..., 22 on the operation board 20, serial numbers of the control switches 22, ..., 22, connector array information every load control device 42, ..., 42 (or the plural number of slave multiplex communication units 48, ..., 48), output terminal information of these connectors, information of the output terminals that may be connected to the loads 24, ..., 24, control condition information every load 24, ..., 24 (e.g., drive power condition, drive period condition, open or close of the interlocked doors), name information of the loads 24, ..., 24, information storage date, user codes, serial number of look-up tables, various default setting information, and the like.

In designing the connection correspondence of the control switches 22, ..., 22 to the loads 24, ..., 24, the CPU as a key part for operation contained in the control-specification design management system 10 refers to the connection correspondence stored in the look-up table 12, which is stored in a nonvolatile memory (e.g., EEPROM) contained in the control-specification design management system 10, and presents to a designer candidates for the loads 24, ..., 24 that can be controlled when these are connected to the control switches 22, ..., 22.

In this case, the CPU may refer to the look-up table 12 (Fig. 22) containing the default correspondence of the addresses of the control-specification information 32 and the terminal positions thereof, in addition to the connection correspondence stored in the look-up table 12, which is stored in a nonvolatile memory (e.g., EEPROM).

While seeing the candidates, a designer selects the most suitable one from among those presented candidates. In this way, he designs control-specification information 32 (Figs. 7 and 21) for the load control devices 42, ..., 42. The data format shown in Fig. 7 is described in a banner that designers and workers can easily understand it. The data format shown in Fig. 21 is described in a manner that the computer resource, for example, the CPU as a key part for operation, can easily interpret and execute it. Both the data formats have the same meaning.

Accordingly, it is easy to computerize the design work of the control-specification information 32 (Figs. 7 and 21), which is entirely based on the manual work. The addition and alteration of the control-specification information are easy. This leads to the reduction of the number of step of a design process and the cost to manufacture, and the improvement of the productivity.

The CPU as a key part for operation in the control-specification design management system 10, which is used for the load control devices 42, ..., 42, is capable of forming a slip file 14 using the formed control-specification information 32 (Figs. 7 and 21), and printing out the contents of the slip file 14 by a printing means (a printer in the embodiment (e.g., a laser printer, a thermal transfer printer, an ink jet printer, a discharging printer, or a thermal printer). The slip file 14 is printed out in the form of "Switch Layout Table" (Fig. 13) and "Terminal Layout List" (Fig. 14). In this case, the contents of the slip file may be displayed on the screen of a display means instead of printing out them on the paper.

In the present embodiment, the designed slip file 14 is stored in a storing means, such as magneto-optical storing means or a magnetic storing means. The data format of the designed slip file 14 that is stored in a storing means, such as magneto-optical storing means or a magnetic storing means, is shown in Fig. 8.

The slip file 14 printed out by the printing means, for example, a printer (or slip file 14 displayed by a display means, for example, a display device) is formatted as of "Switch Layout Table" and "Terminal Layout Table" shown in Figs. 13 and 14.

In designing the connection correspondence of the control switches 22, ..., 22 to the loads 24, ..., 24, the CPU as a key part for operation in the control-specification design management system 10 refers to the connection correspondence stored in the look-up table 12 stored in a nonvolatile memory (e.g., EEPROM) contained in the control-specification design management system 10 or a slip file 14 prepared in the preceding design, which is stored in a storing means, such as magneto-optical storing means or a magnetic storing means contained in the control-specification design management system 10, and presents to a designer candidates for the loads 24, ..., 24 that can be controlled when these are connected to the control switches 22, ..., 22. While seeing the candidates, the designer selects the most suitable one from among those presented candidates. In this way, he designs control-specification information 32.

In this case, the CPU may refer to the look-up table 12 (Fig. 22) containing the default correspondence of the addresses of the control-specification information 32 and the terminal positions thereof, in addition to the connection correspondence stored in the look-up table 12, which is stored in a nonvolatile memory (e.g., EEPROM) or the slip file 14 prepared in the preceding design, which is stored in a storing means, such as magneto-optical storing means or a magnetic storing means contained in the control-specification design management system 10.

The data formats of the control-specification information 32 are shown in Figs. 7 and 21. The data format shown in Fig. 7 is described in a manner that designers and workers can easily understand it. The data format shown in Fig. 21 is described in a manner that the computer resource, for example, the CPU as a key part for operation, can easily interpret and execute it. Both the data formats have the same meaning.

The designer may refer to the look-up table 12 (Fig. 22) containing the default correspondence of the addresses of the control-specification information 32 and the terminal positions thereof, when selecting the most suitable one from among those presented candidates.

Accordingly, it is easy to computerize the design work of the control-specification information 32, which is entirely based on the manual work. The addition and altering of the control-specification information 32 are easy. This leads to the reduction of the number of steps of a design process and the cost to manufacture, and the improvement of the productivity.

The CPU as a key part for operation in the control-specification design management system 10 used for the load control devices 42, ..., 42 may print out or store the contents of the formed slip file 14 by the printing means. Accordingly, the addition and alteration of the control-specification information 32 are easy, resulting in the reduction of the number of steps of a design process and the cost to manufacture, and the improvement of the productivity.

Also in this case, the control-specification design management system 10 is capable of forming a slip file 14 using the formed control-specification information 32, and printing out the contents of the slip file 14. The contents of the slip file 14 may be displayed on the screen of a display means instead of printing out them on the paper.

The operation of the control-specification design management system 10 of the present invention will be described in more detail with reference to Figs. 3, 4, 9, 10, 11 and 12.

The control-specification design management system 10 is operable in any of the following modes: a generation mode for generating control-specification information 32 (or slip file 14) (Fig. 3), a storage mode for storing control-specification information 32 (or slip file 14) (Fig 4), a rewrite mode for rewriting control-specification information 32 (or slip file 14) (Fig. 9), a reference (retrieval) mode for referring to control-specification information 32 (or slip file 14) (Fig. 10), a print mode for printing the contents of the slip file 14 (Fig. 11), and a dump display mode for dumping control-specification information 32 (or slip file 14) (Fig. 12), An operator may select a desire mode from among those modes on a main menu. The functions and operations of those modes will be described.

### 1) Generation mode for Generating Control-Specification Information 32 (or slip File 14) (Fig. 3):

The graphics and tables as shown in Figs. 5 and 6 are used for setting up a generation mode for generating control-specification information 32 (or slip file 14), for the enhancement of the user interface.

The control-specification design management system 10 refers to the connection correspondence stored in the look-up table 12 and visually presents to a designer candidates for the loads 24, ..., 24 that can be controlled when these are connected to the control switches 22, ..., 22. In this case, only the candidates may be highlighted for emphasizing them.

After the generation mode is selected on the main menu, the system control in the control-specification design management system 10 requests the user to enter key information, such as date of recording, user code (or name), serial number (registered number of each user), and the like. The system control executes a retrieval process according to the key information entered, and retrieves the file of the control-specification information 32 (or slip file 14) previously designed (step S1-1).

The system control checks if the retrieved file is correct or wrong (step S1-2). If a desired file is hit, types of the control switches 22, ..., 22 are set (step S1-4). At this time, the control condition is set every type of the control switches 22, ..., 22 (step 51-3). In setting the control conditions, the look-up table 12 shown in Fig. 17 is referred to.

A file to select the types of the control switches 22, ..., 22 previously designed (or designed) may be retrieved and used (step S1-6). The default look-up table 12 as shown in Fig. 22 may also be referred to.

In selecting the types of the control switches 22, ..., 22, the look-up tables 12 shown in Figs. 15 to 21 are referred to. Following the process of selecting the types of the control switches 22, ..., 22, the system control jumps to the storage mode where the data representative of the types of the control switches is stored (step S1-5), and then executes the process of selecting the positions and the names of the control switches 22, ..., 22 (step S1-7).

In executing the process of selecting the positions and the names of the control switches 22 ..., 22, the look-up tables 12 shown in Figs. 15 to 21 are referred to. The default look-up table 12 as shown in Fig. 22 may also be referred to.

The files to select the positions and the names of the control switches 22, ..., 22 previously designed (or designed) may be retrieved and used (step S1-9). The default look-up table 12 as shown in Fig. 22 may also be referred to.

Following the process of selecting the positions and the names of the control switches 22, ..., 22, the system control jumps to the storage mode where the type data is stored (step S1-8), and then executes the process of selecting the connectors (step S1-10).

In executing the process of selecting the connectors shown in Figs. 15 to 21 are referred to. The connector selection file previously designed (or designed) may be retrieved and used (step S1-12).

When the connector selection mode ends, the system control jumps to the storage mode where it stores the type data (step S1-11), and executes the process of displaying the names of the loads 24, ..., 24 (step S1-13).

The file to select the names of the loads 24, ..., 24 previously designed (or designed) may be retrieved and used (step S1-4). The default look-up table 12 as shown in Fig. 22 may also be referred to.

### 2) Storage Mode for Storing Control-Specification Information 32 (or slip file 14) (Fig 4):

This mode is a routine that is called as a, subroutine and executed mainly in the generation mode for generating the control-specification information 32 (or slip file 14).

When it is called, the system control receives the data to be stored and stores it as a file into the magnetic storing medium (step S2-1; During the execution of the storing process, a message of "under data storing" is displayed (step S2-2).

### 3) Rewrite Mode for Rewriting Control-Specification Information 32 (or slip File 14) (Fig. 9):

The system control executes a retrieval process according to key information, such as date of recording, user code (or name), serial number (registered number of each user), and the like (step S3-1), and on the basis of the retrieval result, executes a process of rewriting the file of the control-specification information 32 (or slip file 14) previously designed (or designed) (steps S3-2 to 3-4).

### 4) Reference (Retrieval) Mode for Referring to Control-Specification Information 32 (or slip File 14) (Fig. 10):

The system control executes a retrieval process according to key information, such as date of recording, user code (or name), serial number (registered number of each user), and the like (step S4-1), and on the basis of the retrieval result, retrieves the file of the control-specification information 32 (or slip file 14) previously designed (or designed) (steps 54-2 to 4-4).

### 5) Print Mode for Printing the Contents of the slip File 14 (Fig. 11):

The system control executes a retrieval process according to key information, such as date of recording, user code (or name), serial number (registered number of each user), and the like (step S5-1), and on the basis of the retrieval result, prints out the file of the control-specification information 32 (or slip file 14) previously designed (or designed) (steps S5-2 to 5-3).

### 6) Dump Display Mode for Dumping Control-Specification Information 32 (or slip File 14) (Fig. 12):

The system control executes a retrieval process according to key information, such as date of recording, user code (or name), serial number (registered number of each user), and the like (step S6-1), and on the basis of the retrieval result, dumps into the display means the file of the control-specification information 32 (or slip file 14) previously designed (or designed) (steps S6-2).

As seen from the foregoing description, the control-specification design management system 10 used for the load control devices 42, ..., 42 provides an easy computerization of the design work, addition and alteration of the control-specification information 32, which have thus far been based on only the manual work. The addition and alteration of the control-specification information 32 are easy. Further, it is easy to standardize the load control devices and the wire harness (viz., to manufacture those according to established standards). The reduction of the number of steps of the design process, the productivity improvement, the cost reduction are realized.

In designing the connection correspondence of the control switches to the loads, the control-specification design management system used for the load control devices refers to the connection correspondence stored in the look-up table or a slip file prepared in the preceding design, and presents to a designer candidates for the loads that can be controlled when these are connected to the control switches. While seeing the candidates, the designer selects the most suitable one from among those presented candidates. In this way, he designs control-specification information. Accordingly, it is easy to computerize the design work of the control-specification information, which is entirely based on the manual work. The addition and altering of the control-specification information are easy. This leads to the reduction of the number of steps of a design process and the cost to manufacture, and the improvement of the productivity.

Since the contents of the formed slip file can be stored or printed out, the addition and alteration of the control-specification information are easy, resulting in the reduction of the number of steps of a design process and the cost to manufacture, and the improvement of the productivity.

Thus, designed control-specification information is stored in the rewritable storage. The storage is electrically and removably coupled with the load control device (or the master multiplex communication unit or the slave multiplex communication units), and the designed control-specification information may be transmitted to the device when required. To alter the designed control-specification information, all a designer has to do is to alter only the control-specification information in the storage. Accordingly, in the present invention, there is no need of providing the exclusive load control devices (or the exclusive master multiplex communication units or the exclusive slave multiplex communication units), of which the number is equal to the number of kinds of the control-specification information, although such number of exclusive load control devices are required in the conventional control-specification design management system. Therefore, the invention makes it easy to standardize the load control devices and the wire harness (viz., to manufacture those according to established standards). The reduction of the number of steps of the design process, the productivity improvement, the cost reduction are realized.

## Claims

1. A control-specification design system used for
load control devices (42) having a rewritable storage (30), said load control devices (42) being removably coupled with the control-specification design system, said rewritable storage (30) storing control-specification information (32) on a connection correspondence of a plurality of control switches (22) positioned on a control panel (20) with loads, said load control devices (42) being capable of controlling the loads by using load control information (44) based on the control-specification information, when the loads are connected to the control switches (22), said control-specification design system comprising
a look-up table (12) for storing said connection correspondence,
wherein the control-specification design system refers to said look-up table (12), and presents to a designer candidates for the loads, to thereby impel the designer to select the most suitable one from among those presented candidates, whereby said control-specification information (32) is formed.

2. A control-specification design system as set forth in claim 1, wherein the system further comprises
a master multiplex communication unit (46) for carrying out a process of multiplexing said load control information (44) and transmitting the multiplexed load control information through a multiplex transmission line (40) to
a plurality of slave multiplex communication units (48) for carrying out a process of multiplexing load control information (44) and said slave multiplex communication units (48) being capable of controlling the loads by using the multiplexed load control information.

3. The control-specification design system as set forth in claim 1 or 2, wherein a slip file (14) is formed using the control-specification information (32), and the contents of the slip file (14) is printed out.

4. The control-specification design system as set forth in claim 3, wherein the control-specification design system refers to the look-up table (12) or said slip file (14) when designing the connection correspondence of the control switches to the loads.

5. The control-specification design system as set forth in one of claims 1 to 4, wherein control-specification information (32) is formed for each slave multiplex communication unit (48).

6. A load control device having a rewritable storage (30) and being removably coupled with a control-specification design system, said rewritable storage (30) storing control-specification information (32) on a connection correspondence of a plurality of control switches (22) positioned on a control panel (20) with loads, said load control device (42) being capable of controlling said loads by using load control information (44) based on the control-specification information (32), when the loads are connected to the control switches, said control-specification design system comprising
a look-up table (12) for storing said connection correspondence,
wherein said control-specification design system refers to said look-up table (14), and presents to a designer candidates for said loads, to thereby impel the designer to select the most suitable from among those presented candidates, whereby control-specification information (32) is formed.

7. A load control device as set forth in claim 6, wherein the load control device further comprises a master multiplex communication unit (46) for carrying out a process of multiplexing load control information (44) and transmitting the multiplex load control information (44) through multiplex transmission lines (40) to
a plurality of slave multiplex communication units (48) for carrying out a process of multiplexing load control information (44) and said slave multiplex communication units (48) being capable of controlling said loads by using the multiplexed load control information.

8. The load control device as set forth in claim 7, wherein said rewriteable storage (30) stores control-specification information (32) for each slave multiplex communication unit (48).

## Patentansprüche

1. System zum Entwickeln von Steuervorgaben, das für Laststeuervorrichtungen (42) mit einem überschreibbaren Speicher (30) eingesetzt wird, wobei die Laststeuervorrichtungen (42) lösbar mit dem System zum Entwickeln von Steuervorgaben verbunden werden und der überschreibbare Speicher (30) Steuervorgabeinformationen (32) über eine Verbindungszuordnung einer Vielzahl von Steuerschaltern (22), die an einer Steuertafel (20) angeordnet sind, zu Lasten speichert, und die Laststeuervorrichtungen (42) in der Lage sind, die Lasten unter Verwendung der Laststeuerinformationen (44) auf der Grundlage der Steuervorgabeinformationen zu steuern, wenn die Lasten mit den Steuerschaltern (22) verbunden sind, wobei das System zum Entwickeln von Steuervorgaben umfasst:
eine Verweistabelle (12) zum Speichern der Verbindungszuordnung,
wobei das System zum Entwickeln der Steuervorgaben auf die Verweistabelle (12) zugreift und einem Entwickler Kandidaten für die Lasten präsentiert, um so den Entwickler zu veranlassen, den geeignetsten aus den präsentierten Kandidaten auszuwählen, womit die Steuervorgabeinformationen (32) erzeugt werden.

2. System zum Entwickeln von Steuervorgaben nach Anspruch 1, wobei das System des Weiteren umfasst:
eine Haupt-Multiplex-Informationsübertragungseinheit (46) zum Ausführen eines Vorgangs des Multiplexierens der Laststeuerinformationen (44) und des Übertragens der multiplexierten Laststeuerinformationen über eine Multiplex-Übertragungsleitung (40) zu einer Vielzahl von Unter-Multiplex-Informationsübertragungseinheiten (48) zum Ausführen eines Vorgangs des Multiplexierens von Laststeuerinformationen (44), wobei die Unter-Multiplex-Informationsübertragungseinheiten (48) in der Lage sind, die Lasten unter Verwendung der multiplexierten Laststeuerinformationen zu steuern.

3. System zum Entwickeln von Steuervorgaben nach Anspruch 1oder 2, wobei eine Spaltendatei (14) unter Verwendung der Steuervorgabeinformationen (32) erzeugt wird und der Inhalt der Spaltendatei (14) ausgedruckt wird.

4. System zum Entwickeln von Steuervorgaben nach Anspruch 3, wobei das System zum Entwickeln von Steuervorgaben auf die Verweistabelle (12) oder die Spaltendatei (14) zugreift, wenn die Verbindungszuordnung der Steuerschalter zu den Lasten entwickelt wird.

5. System zum Entwickeln von Steuervorgaben nach einem der Ansprüche 1 bis 4, wobei die Steuervorgabeinformationen (32) für jede Unter-Multiplex-Informationsübertragungseinheit (48) erzeugt werden.

6. Laststeuervorrichtung mit einem überschreibbaren Speicher (30), die lösbar mit einem System zum Entwickeln von Steuervorgaben verbunden wird, wobei der überschreibbare Speicher (30) Steuervorgabeinformationen (32) über eine Verbindungszuordnung einer Vielzahl von Steuerschaltern (22), die an einer Steuertafel (20) angeordnet sind, zu Lasten speichert und die Laststeuervorrichtung (42) in der Lage ist, die Lasten unter Verwendung von Laststeuerinformationen (44) auf der Grundlage der Steuervorgabeinformationen (32) zu steuern, wenn die Lasten mit den Steuerschaltern verbunden werden, wobei das System zum Entwickeln von Steuervorgaben umfasst:
eine Verweistabelle (12) zum Speichern der Verbindungszuordnung,
wobei das System zum Entwickeln von Steuervorgaben auf die Verweistabelle (14) zugreift und einem Entwickler Kandidaten für die Lasten präsentiert, um so den Entwickler zu veranlassen, den geeignetesten aus den präsentierten Kandidaten auszuwählen, womit Steuervorgabeinformationen (32) erzeugt werden.

7. Laststeuervorrichtung nach Anspruch 6, wobei die Laststeuervorrichtung des Weiteren eine Haupt-Multiplex-Informationsübertragungseinheit (46) zum Ausführen eines Vorgangs des Multiplexierens von Laststeuerinformationen (44) und des Übertragens der Multlplex-Laststeuerinformationen (44) über Multiplex-Übertragungsleitungen (40) zu einer Vielzahl von Unter-Multiplex-Informationsübertragungseinheiten (48) zum Ausführen eines Vorgangs des Multiplexierens von Laststeuerinformationen (44) umfasst und die Unter-Multiplex-Informationsübertragungseinheiten (48) in der Lage sind, die Lasten unter Verwendung der multiplexierten Laststeuerinformationen zu steuern.

8. Laststeuervorrichtung nach Anspruch 7, wobei der überschreibbare Speicher (30) Steuervorgabeinformationen (32) für jede Unter-Multiplex-Informationsübertragungseinheit (48) speichert.

## Revendications

1. Système de conception de commande-spécification utilisé pour des dispositifs de commande de charges (42) ayant une mémoire réinscriptible (30), lesdits dispositifs de commande de charges (42) étant couplés de façon amovible avec le système de conception de commande-spécification, ladite mémoire réinscriptible (30) mémorisant l'information de commande-spécification (32) sur une correspondance de connexion d'une pluralité de commutateurs de commande (22) positionnés sur un panneau de commande (20) avec des charges, lesdits dispositifs de commande de charges (42) étant capables de commander les charges en utilisant une information de commande de charges (44) basée sur l'information de commande-spécification, quand les charges sont connectées aux commutateurs de commande (22), ledit système de conception de commande-spécification comprenant une table de consultation (12) pour mémoriser ladite correspondance de connexion, dans lequel le système de conception de commande-spécification se réfère à ladite table de consultation (12), et présente à un concepteur des candidats pour les charges, de façon à pousser ainsi le concepteur à sélectionner celui le plus convenable parmi ces candidats présentés, en conséquence de quoi ladite information de commande-spécification (32) est formée.

2. Système de conception de commande-spécification selon la revendication 1, dans lequel le système comprend en outre une unité de communication multiplex maître (46) pour mettre en oeuvre un processus de multiplexage de ladite information de commande de charges (44) et transmettre l'information de commande de charges multiplexée par l'intermédiaire d'une ligne de transmission multiplex (40) à une pluralité d'unités de communication multiplex esclaves (48) pour mettre en oeuvre un processus de multiplexage d'information de commande de charges (44) et lesdites unités de communication multiplex esclaves (48) étant capables de commander les charges en utilisant l'information de commande de charges multiplexée.

3. Système de conception de commande-spécification selon la revendication 1 ou 2, dans lequel un fichier flip (14) est formé par utilisation de l'information de commande-spécification (32), et le contenu du fichier slip (14) est imprimé.

4. Système de conception de commande-spécification selon la revendication 3, dans lequel le système de conception de commande-spécification se réfère à la table de consultation (12) ou audit fichier slip (14) lors de la conception de la correspondance de connexion des commutateurs de commande des charges.

5. Système de conception de commande-spécification selon l'une des revendications 1 à 4, dans lequel l'information de commande-spécification (32) est formée pour chaque unité de communication multiplex esclave (48) .

6. Dispositif de commande de charges ayant une mémoire réinscriptible (30) et étant couplé de façon amovible à un système de conception de commande-spécification, ladite mémoire réinscriptible (30) mémorisant une information de commande-spécification (32) sur une correspondance de connexion d'une pluralité de commutateurs de commande (22) positionnés sur un panneau de commande (20) avec des charges, ledit dispositif de commande de charges (42) étant capable de commander lesdites charges en utilisant l'information de commande de charges (44) basée sur l'information de commande-spécification (32), quand les charges sont connectées aux commutateurs de commande, ledit système de conception de commande-spécification comprenant une table de consultation (12) pour mémoriser ladite correspondance de connexion, dans lequel ledit système de conception de commande-spécification se réfère à ladite table de consultation (14), et présente à un concepteur des candidats pour lesdites charges, de façon à pousser ainsi le concepteur à sélectionner le plus convenable parmi ces candidats présentés, en conséquence de quoi une information de commande-spécification (32) est formée.

7. Dispositif de commande de charges selon la revendication 6, dans lequel le dispositif de commande de charges comprend en outre une unité de communication multiplex maître (46) pour mettre en oeuvre un processus de multiplexage d'information de commande de charges (44) et transmettre l'information de commande de charges multiplex (44) par l'intermédiaire de lignes de transmission multiplex (40) à une pluralité d'unités de communication multiplex esclaves (48) pour mettre en oeuvre un processus de multiplexage d'information de commande de charges (44) et lesdites unités de communication multiplex esclaves (48) étant capables de commander lesdites charges en utilisant l'information de commande de charges multiplexée.

8. Dispositif de commande de charges selon la revendication 7, dans lequel ladite mémoire réinscriptible (30) mémorise l'information de commande-spécification (32) pour chaque unité de communication multiplex esclave (48).
